# EUROPEAN PATENT APPLICATION

(11) **EP 4 013 025 A1**
(43) Date of publication of application: **15.06.2022**
(21) Application number: 21209723.2
(22) Date of filing: 22.11.2021
(51) Int. Cl.: H04N 1/23, H04N 1/387

(54) **IMAGE FORMING APPARATUS AND IMAGE FORMING METHOD**

(30) Priority: 09.12.2020 JP 2020204300
(71) Applicant: KONICA MINOLTA, INC., Tokyo 100-7015 (JP)
(72) Inventor: Kurabayashi, Kazuhiro, Tokyo, 100-7015 (JP)
(74) Representative: Henkel & Partner mbB

(57) **Abstract**

Provided is an image forming apparatus including: an image forming section that forms the second image obtained by repeatedly placing the first image on a continuous recording medium; and an image processing execution section that executes image processing on the first image according to an arrangement position of the first image on the second image. Provided is an image forming method including: forming the second image obtained by repeatedly placing the first image on a continuous recording medium; and executing image processing on the first image according to an arrangement position of the first image on the second image.

## Description

### BACKGROUND OF THE INVENTION

### 1. Field of the Invention

The present invention relates to an image forming apparatus and an image forming method.

### 2. Description of Related Art

Inkjet image forming apparatuses using an inkjet system have been widely spread as apparatuses for forming high-definition images for various recording media such as paper, fabric, and the like. In particular, in a case where a recording medium is a long web-shaped continuous recording medium, a belt conveyance device having an endless conveyance belt is used to convey the continuous recording medium in close contact with the conveyance belt.

When forming, on the continuous recording medium, an image (printing image) which is long in a conveyance direction of the continuous recording medium, the above-described inkjet image forming apparatuses may generate, as the printing image, an image obtained by simply repeatedly placing a basic image in the conveying direction and a width direction of the continuous recording medium.

Meanwhile, according to a request of a user, it may be desired to form a printing image having design properties based on the basic image, instead of simply repeatedly placing the basic image. In connection with the above request, a technology has been proposed for automatically generating a combined image designed so as to have rises and falls in design on each page on which an image is placed (e.g., see Japanese Patent Application Laid-Open No. 2017-199961 (hereinafter referred to as Patent literature (PTL))).

The technology described in the PTL calculates a layout evaluation value of the combined image for each page and controls at least one of selection of an image arrangement template and selection of an image such that the calculated layout evaluation value for each page has a regular variability along the progress of pages. As a result, the layout evaluation value for each page has the regular variability along the progress of pages, and thus, lively impression and atmosphere having rises and falls can be given to a person who sees the combined image.

### SUMMARY OF THE INVENTION

However, the technology described in the PTL performs the selections of the image arrangement template and the image based on the layout evaluation value for each page. Thus, even when using the technology described in the PTL, a problem arises in that a printing image having design properties cannot be formed on a continuous recording medium having no concept of pages in the first place.

An object of the present invention is to provide an image forming apparatus and an image forming method each capable of forming a printing image having design properties on a continuous recording medium.

To achieve at least one of the abovementioned objects, according to an aspect of the present invention, an image forming apparatus reflecting one aspect of the present invention includes: an image forming section that forms a second image obtained by repeatedly placing a first image on a continuous recording medium; and
an image processing execution section that executes image processing on the first image according to an arrangement position of the first image on the second image.

To achieve at least one of the abovementioned objects, according to another aspect of the present invention, an image forming method reflecting one aspect of the present invention includes: forming a second image obtained by repeatedly placing a first image on a continuous recording medium; and
executing image processing on the first image according to an arrangement position of the first image on the second image.

### BRIEF DESCRIPTION OF DRAWING

The advantages and features provided by one or more embodiments of the invention will become more fully understood from the detailed description given hereinbelow and the appended drawings which are given by way of illustration only, and thus are not intended as a definition of the limits of the present invention:
FIG. 1 illustrates a schematic configuration of an image forming apparatus;
FIG. 2 is a block diagram illustrating a main functional configuration of the image forming apparatus;
FIG. 3 illustrates an example of a printing image obtained by repeatedly placing a basic image;
FIG. 4 illustrates another example of a printing image obtained by repeatedly placing a basic image;
FIG. 5 is a flowchart illustrating an exemplary image forming operation of the image forming apparatus; and
FIGS. 6A to 6C illustrate a variation of a printing image obtained by repeatedly placing a basic image.

### DESCRIPTION OF THE PREFERRED EMBODIMENTS

Hereinafter, one or more embodiments of the present invention will be described with reference to the drawings. However, the scope of the invention is not limited to the disclosed embodiments.

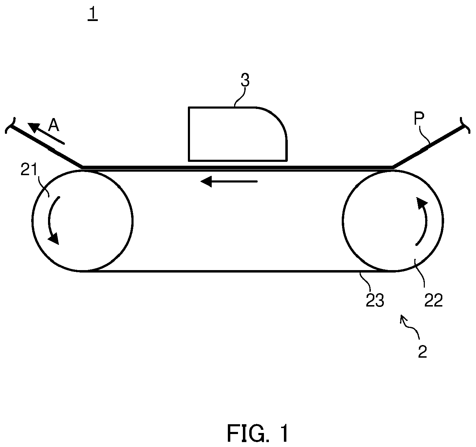

FIG. 1 illustrates a schematic configuration of image forming apparatus 1 according to the present embodiment. As illustrated in FIG. 1, image forming apparatus 1 is an image forming apparatus using an inkjet system and includes belt conveyance device 2 and image forming head 3.

In belt conveyance device 2, endless conveyance belt 23 having a predetermined width is suspended in a tensioned state over driving roller 21 and driven roller 22 which are arranged in parallel to each other with a predetermined distance therebetween. An upper surface of conveyance belt 23 suspended over driving roller 21 and driven roller 22 serves as a placement surface for placing continuous recording medium P in close contact therewith. Note that, on a surface of conveyance belt 23, an adhesive (so called *"jibari"* in Japanese) is applied for the purpose of close contact of continuous recording medium P being conveyed with the upper surface of conveyance belt 23. In addition, driving roller 21 is driven by a sub-scanning motor not illustrated.

In belt conveyance device 2, when driving roller 21 is rotated by rotational driving of the sub scanning motor in a counter clockwise direction (see the arrow) in FIG. 1 at a predetermined speed, conveyance belt 23 suspended in between with driven roller 22 is rotated. With such an operation, continuous recording medium P placed on the upper surface of conveyance belt 23 is conveyed in the direction of arrow A, which is a sub scanning direction.

Continuous recording medium P may be any recording medium typically used for inkjet recording, such as paper, fabric, plastic film, and glass plate. In the present embodiment, continuous recording medium P has an elongated form that is continuously fed from a roll wound in a roll form.

Image forming head 3 (also referred to as an inkjet head, which functions as an "image forming section" of the present invention) is disposed above the surface of conveyance belt 23 on which continuous recording medium P is placed with a predetermined distance therebetween, and is configured to discharge ink drops from a plurality of nozzles provided in its bottom surface so as to form a desired image (printing image) on continuous recording medium P conveyed by the rotational movement of conveyance belt 23.

In the present embodiment, image forming head 3 is a shuttle-type (multiple-path type) image forming head mounted in a carriage not illustrated and configured to move back and forth in a main scanning direction orthogonal to a conveyance direction of continuous recording medium P conveyed intermittently. In this case, during image forming, driving of driving roller 21 is controlled such that conveyance belt 23 performs an intermittent operation of repeating a standby state and a driving state.

Alternatively, image forming head 3 may be a line-type (single-path type) image forming head fixed across a width direction of conveyance belt 23 and forms an image by discharging ink drops onto continuous recording medium P conveyed continuously. In this case, during image forming, the drive of driving roller 21 is controlled such that conveyance belt 23 continuously moves (rotates).

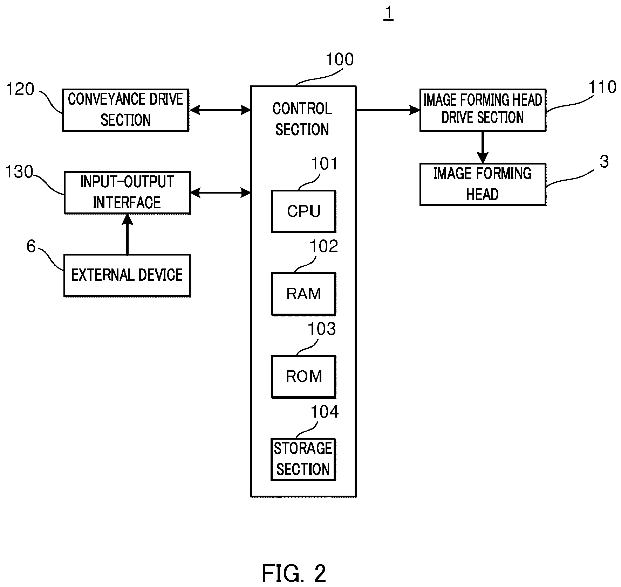

FIG. 2 is a block diagram illustrating a main functional configuration of image forming apparatus 1. Image forming apparatus 1 includes control section 100, image forming head drive section 110, conveyance drive section 120 and input-output interface 130. Incidentally, control section 100 functions as an "image processing execution section" of the present invention.

Control section 100 includes Central Processing Unit (CPU) 101, Random Access Memory (RAM) 102, Read Only Memory (ROM) 103, and storage section 104.

CPU 101 reads a program and setting data for various controls stored in ROM 103 to record them in RAM 102, executes the program, and performs various kinds of computing processing. CPU 101 also integrally controls the overall operation of image forming apparatus 1.

RAM 102 provides CPU 101 with working memory space and stores temporary data. Note that, RAM 102 may include a non-volatile memory.

ROM 103 stores the program and setting data for various controls to be executed by CPU 101. Instead of ROM 103, a rewritable non-volatile memory such as an Electrically Erasable Programmable Read Only Memory (EEPROM) or a flash memory may be used.

Storage section 104 stores a printing job (image recording command) input from external device 6 via input-output interface 130 and image data related to the printing job. Hard Disk Drive (HDD) may be used as storage section 104, and Dynamic Random Access Memory (DRAM) or the like may be used in combination, for example.

Image forming head drive section 110 provides image forming head 3 with a driving signal corresponding to image data at an appropriate timing based on the control by control section 100, and thereby discharges ink drops of an amount corresponding to a pixel value of the image data from nozzles of image forming head 3.

Conveyance drive section 120 provides the sub-scanning motor of driving roller 21 with a driving signal based on the control by control section 100, and thereby rotates conveyance belt 23 at a predetermined rate and timing.

Input-output interface 130 mediates transmission and reception of data between external device 6 and control section 100. Input-output interface 130 may be composed of, for example, any of various serial interfaces, various parallel interfaces, or a combination thereof.

External device 6 is, for example, a personal computer which provides control section 100 with an image recording command (printing job), image data, and the like via input-output interface 130.

When an image (printing image) which is long in the conveyance direction of continuous recording medium P is formed on continuous recording medium P, in image forming apparatus 1, an image obtained by simply repeatedly placing a basic image in the conveying direction and a width direction of continuous recording medium P may be generated as the printing image.

Meanwhile, according to a request of a user, it may be desired to form a printing image having design properties based on the basic image, instead of simply repeatedly placing the basic image. In connection with the above request, a technology has been proposed for automatically generating a combined image designed so as to have rises and falls in design on each page on which an image is placed (e.g., see the PTL).

The technology described in the PTL calculates a layout evaluation value of the combined image for each page and controls at least one of selection of an image arrangement template and selection of an image such that the calculated layout evaluation value for each page has a regular variability along the progress of pages. As a result, the layout evaluation value for each page has the regular variability along the progress of pages, and thus, lively impression and atmosphere having rises and falls can be given to a person who sees the combined image.

However, the technology described in the PTL performs the selections of the image arrangement template and the image based on the layout evaluation value for each page. Thus, even when using the technology described in the PTL, a problem arises in that a printing image having design properties cannot be formed on a continuous recording medium having no concept of pages in the first place.

Hence, in the present embodiment, in order to enable a printing image having design properties to be formed on continuous recording medium P, image forming apparatus 1 includes image forming head 3 (image forming section) that forms a printing image (corresponding to a "second image" of the present invention) obtained by repeatedly placing a basic image (corresponding to a "first image" of the present invention) on continuous recording medium P, and control section 100 (image processing execution section) that executes image processing on the basic image according to an arrangement position of the basic image on the printing image.

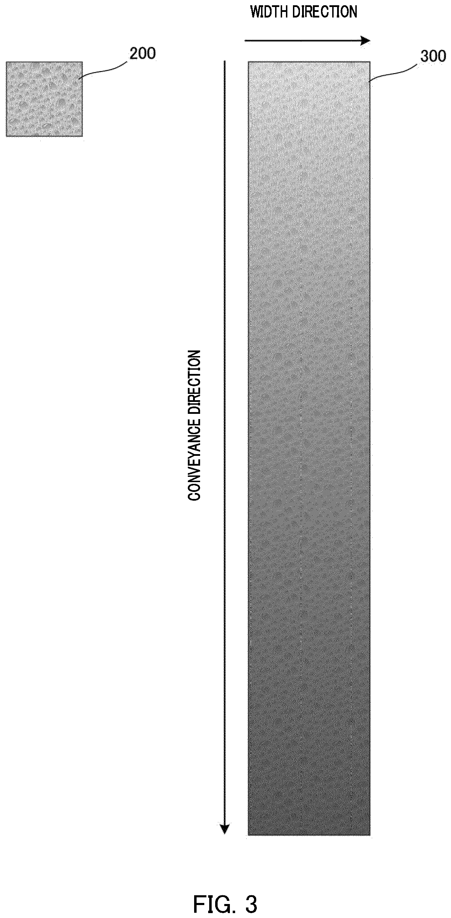

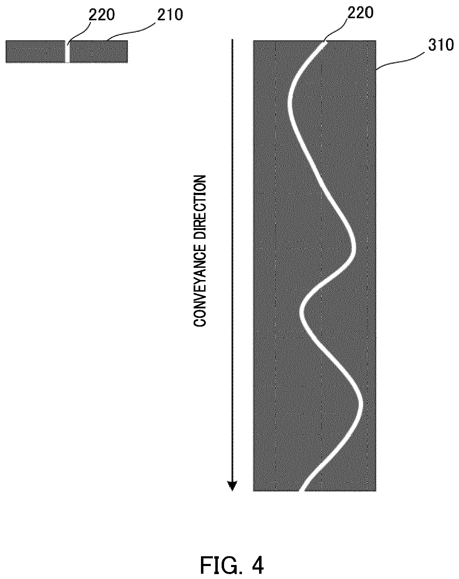

FIGS. 3 and 4 are diagrams illustrating examples of printing images obtained by repeatedly placing basic images. In FIG. 3, basic image 200 is an image that is specified by a user and is composed of a plurality of dot lines in the conveyance direction of continuous recording medium P when printing image 300 is formed on continuous recording medium P. Printing image 300 is an image obtained by repeatedly placing basic image 200 in the conveyance direction and the width direction of continuous recording medium P.

Control section 100 executes image processing (image computing processing) on basic image 200 according to an arrangement position of basic image 200 on printing image 300. In the example illustrated in FIG. 3, image processing is processing for changing a color of basic image 200, more specifically, processing for changing a density value of the color of basic image 200 stepwise from a predetermined low density to a predetermined high density by a predetermined value along the conveyance direction of continuous recording medium P (change direction of the arrangement position of basic image 200).

Control section 100 may execute the image processing (image computation processing) on basic image 200 according to the arrangement position of basic image 200 on printing image 300 and a time parameter. For example, control section 100 may vary a change amount (predetermined value) in changing the density value of the color of basic image 200 stepwise from the predetermined low density to the predetermined high density according to a change in the time parameter (e.g., current date and time).

In FIG. 4, basic image 210 is an image that is specified by a user when printing image 310 in formed on continuous recording medium P. Printing image 310 is an image obtained by repeatedly placing basic image 210 in the conveyance direction of continuous recording medium P.

Control section 100 executes image processing (image computing processing) on basic image 210 according to an arrangement position of basic image 210 on printing image 310. In the example illustrated in FIG. 4, the image processing is processing for deforming basic image 210, more specifically, processing for deforming stepwise a position and inclination of white line image 220 in the width direction included in basic image 210 along the conveyance direction of continuous recording medium P (change direction of the arrangement position of basic image 210) to cause white line image 220 to draw a random curve on printing image 310.

Control section 100 may execute the image processing (image computing processing) on basic image 210 according to the arrangement position of basic image 210 on printing image 310 and a time parameter. For example, control section 100 may vary a change amount in deforming stepwise white line image 220 included in basic image 210 according to a change in the time parameter (e.g., current date and time).

Incidentally, the image processing executed on the basic image may be both of the processing for changing the color of the basic image and the processing for deforming the basic image. In this case, a printing image having more design properties can be formed on continuous recording medium P.

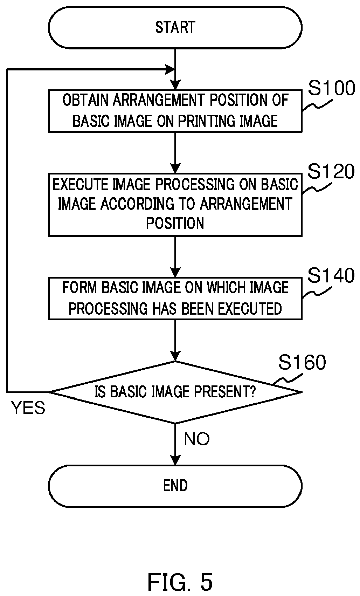

Next, an exemplary image forming operation (corresponding to an "image forming method" of the present invention) of image forming apparatus 1 will be described with reference to a flowchart of FIG. 5.

First, control section 100 obtains an arrangement position of basic image 200 on printing image 300 (step S100). Next, control section 100 executes the image processing (image computing processing) on basic image 200 according to the arrangement position of basic image 200 which has been obtained (step S120).

Control section 100 then controls image forming head drive section 110, that is, image forming head 3 to form basic image 200, on which the image processing has been executed, on continuous recording medium P (step S140).

Then, control section 100 determines whether basic image 200 constituting printing image 300 and not formed on continuous recording medium P is present (step S160). In a case where a result of the determination indicates that basic image 200 not formed on continuous recording medium P is present (step S160: YES), the processing returns to before step S100.

On the other hand, in a case where basic image 200 not formed on continuous recording medium P is not present (step S160: NO), image forming apparatus 1 ends the processing illustrated in FIG. 5. Incidentally, control section 100 may control image forming head drive section 110, that is, image forming head 3, after executing the image processing (image computing processing) on the all of basic image 200 constituting printing image 300, to form the all of basic image 200 on which the image processing has been executed (printing image 300) on continuous recording medium P.

As described in detail above, image forming apparatus 1 according to the present embodiment includes image forming head 3 (image forming section) that forms a printing image obtained by repeatedly placing a basic image on continuous recording medium P, and control section 100 (image processing execution section) that executes image processing on the basic image according to an arrangement position of the basic image on the printing image.

According to the present embodiment configured as described above, when a printing image is formed on continuous recording medium P having no concept of pages in the first place, the image processing is executed on a basic image according to an arrangement position of the basic image on the printing image. Thus, a printing image having design properties can be formed on continuous recording medium P. In particular, determining the basic image, the image processing, and the arrangement position of the basic image on the printing image enables the printing image to be formed on any continuous recording medium P (e.g., continuous recording medium P having a length of 100 m or more in the conveyance direction).

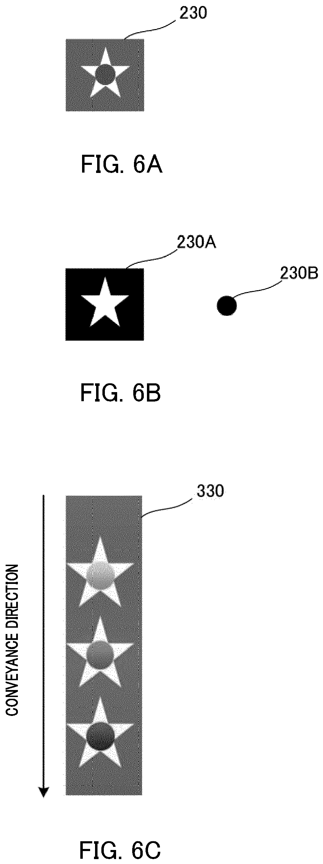

In the above-described embodiment, control section 100 may change an execution mode of the image processing for each image area on the basic image. FIGS. 6A to 6C illustrate a variation of a printing image obtained by repeatedly placing a basic image. In FIG. 6A, basic image 230 is an image that is specified by a user and is composed of a plurality of dot lines in the conveyance direction of continuous recording medium P when printing image 330 (see FIG. 6C) is formed on continuous recording medium P. Printing image 330 is an image obtained by repeatedly placing basic image 230 in the conveyance direction and the width direction of continuous recording medium P.

As illustrated in FIG. 6B, basic image 230 includes image area 230A and image area 230B. In this case, control section 100 changes the execution mode of the image processing for each of image areas 230A and 230B on basic image 230. In the example illustrated in FIGS. 6A to 6C, control section 100 performs processing for changing a color of image area 230A according to an arrangement position of basic image 230 on printing image 330, more specifically, processing for bringing stepwise the color of image area 230A closer to blue along the conveyance direction of continuous recording medium P (change direction of the arrangement position of basic image 230). Moreover, control section 100 performs processing for changing a color of image area 230B according to an arrangement position of basic image 230 on printing image 330, more specifically, processing for changing a density value of the color of image area 230B (e.g., red) stepwise from a predetermined low density to a predetermined high density by a predetermined value along the conveyance direction of continuous recording medium P (change direction of the arrangement position of basic image 230). Note that, control section 100 may change whether the image processing is executed for each of image areas 230A and 230B on basic image 230 as the execution mode of the image processing.

The embodiments described above are merely examples of specific implementation of the present invention, and the technical scope of the present invention should not be restrictively interpreted by these embodiments. That is, the present invention may be implemented in various forms without departing from the spirit thereof or the major features thereof.

Although embodiments of the present invention have been described and illustrated in detail, the disclosed embodiments are made for purposes of illustration and example only and not limitation. The scope of the present invention should be interpreted by terms of the appended claims.

### Reference Signs List

- 1: Image forming apparatus
- 2: Belt conveyance device
- 21: Driving roller
- 22: Driven roller
- 23: Conveyance belt
- 3: Image forming head
- 100: Control section
- 101: CPU
- 102: RAM
- 103: ROM
- 104: Storage section
- 110: Image forming head drive section
- 120: Conveyance drive section
- 130: Input-output interface
- P: Continuous recording medium

## Claims

1. An image forming apparatus (1), comprising:
an image forming section (3) that forms a second image (300) obtained by repeatedly placing a first image (200) on a continuous recording medium (P); and
an image processing execution section (100) that executes image processing on the first image (200) according to an arrangement position of the first image (200) on the second image (300).

2. The image forming apparatus (1) according to claim 1, wherein the first image (200) is an image that is specified by a user.

3. The image forming apparatus (1) according to claim 1 or 2, wherein the image processing includes processing for changing a color of the first image (200).

4. The image forming apparatus (1) according to any one of claims 1 to 3, wherein the image processing includes processing for deforming the first image (210).

5. The image forming apparatus (1) according to any one of claims 1 to 4, wherein the image processing execution section (100) executes the image processing on the first image (210) according to the arrangement position of the first image (210) and a time parameter.

6. The image forming apparatus (1) according to any one of claims 1 to 5, wherein the image processing execution section (100) changes an execution mode of the image processing for each image area on the first image (230).

7. The image forming apparatus (1) according to any one of claims 1 to 6, wherein the second image (300) is obtained by repeatedly placing the first image (200) in at least a conveyance direction of the continuous recording medium (P) or in the conveyance direction and a width direction of the continuous recording medium (P).

8. An image forming method, comprising:
forming a second image (300) obtained by repeatedly placing a first image (200) on a continuous recording medium (P); and
executing image processing on the first image (200) according to an arrangement position of the first image (200) on the second image (300).
